# EUROPÄISCHE PATENTANMELDUNG

(11) **EP 2 161 560 A2**
(43) Veröffentlichungstag der Anmeldung: **10.03.2010**
(21) Anmeldenummer: 09167059.6
(22) Anmeldetag: 03.08.2009
(51) Int. Cl.: G01M 13/02

(54) **Verfahren zum Betreiben eines Prüfstandes für Fahrzeugantriebsstränge**

(30) Priorität: 09.09.2008 DE 102008041883
(71) Anmelder: ZF Friedrichshafen AG, 88038 Friedrichshafen (DE)
(72) Erfinder: Kronawitter, Johann, 94143, Grainet (DE); Schramm, Florian, 94110, Wegscheid (DE); Feicht, Günther, 94568, St. Oswald (DE)

(57) **Zusammenfassung**

Es wird ein Verfahren zum Betreiben eines Prüfstandes (13) für Fahrzeugantriebsstränge (1) beschrieben, bei welchem ein Betriebsverhalten von Rädern eines Fahrzeugantriebsstranges (1) durch mit Wellen (2A, 2B, 3A, 3B) der jeweils wenigstens einen antreibbaren Fahrzeugabtriebes bzw. -achse (2, 3) eines Fahrzeugantriebsstranges (1) verbundenen elektrischen Maschinen (9 bis 12) dargestellt wird, die jeweils in Abhängigkeit eines für jede elektrische Maschine (9 bis 12) bestimmten betriebszustandsabhängigen Drehzahl-Sollwert (n_soll_2A), der jeweils über eine Drehzahlregeiung eingestellt wird, betätigt werden, wobei über ein das Betriebsverhalten der Räder abbildendes Reifenmodell ein Reibwertverlauf über dem Reifenschlupf und zusätzlich dynamische Änderungen des Betriebsverhaltens der Räder in Abhängigkeit von Betriebszustandsparametern der Reifen und Fahrbahn berücksichtigt werden, wobei zur Ermittlung der Reifenkräfte der berechnete Drehzahl-Sollwert dem Reifenmodell zugeführt wird.

## Beschreibung

Die Erfindung betrifft ein Verfahren zum Betreiben eines Prüfstandes für Fahrzeugantriebsstränge gemäß der im Oberbegriff des Patentanspruches 1 näher definierten Art,

Aus der EP 0 338 373 B1 ist ein Prüfstand zum Testen eines Antriebsstranges eines Fahrzeuges ausgehend vom Verbrennungsmotor bis zu den Antriebsachsen bekannt. Trägheitsmomente, Federsteifigkeiten und Dämpfungsmaße werden mittels elektronischer Funktionsglieder oder mittels eines Rechners simuliert, wobei momentengeregelte elektrische Belastungsmaschinen als Übertragungsglieder zwischen den elektronischen Funktionsgliedern oder dem Rechner und dem Prüfstand mit dem Prüfling dienen. Mindestens zwei voneinander unabhängige Belastungsmaschinen sind direkt an die Wellen des zu prüfenden Antriebsstranges anflanschbar. Mittels der elektronischen Funktionsglieder oder des Rechners erfolgt eine Simulation der Räder und des Fahrzeug-Beschleunigungsverhaltens mit Ausnahme der real als Fahrzeugkomponenten vorhandenen Teile. Das um die Radmomente verminderte Fahrzeugwiderstandsmoment wird einem ersten Integrierer mit einer zum Fahrzeugträgheitsmoment proportionalen Zeitkonstante zugeleitet, wobei am ersten Integrierer die der Fahrzeuggeschwindigkeit proportional Winkelgeschwindigkeit abgreifbar ist.

Während des Prüfvorganges eines Fahrzeugantriebsstranges wird der zusätzlich zur Fahrzeuglängsdynamik auftretende Reifenschlupf in Abhängigkeit der aktuellen Radmomente berücksichtigt.

Die statt der Räder an den Antriebswellen des Fahrzeugantriebsstranges angebrachten Belastungsmaschinen sind über einen sogenannten Vier-Quadranten-Betrieb betreibbar, womit von den Belastungsmaschinen ausgehend sowohl ein Antriebsmoment als auch ein Bremsmoment in den Antriebsstrang einleitbar ist.

Ein Regelungs- bzw. Simulationssystem ist zum Simulieren des Einflusses der Fahrzeugmasse und der Fahrwiderstände vorgesehen. Die Kräftebilanz am Fahrzeug wird aufintegriert, wobei das Ergebnis dieser Simulation eine Soll-Geschwindigkeit des Fahrzeuges bzw. eine hierzu proportionale Soll-Drehzahl der Belastungsmaschinen ist, die über eine Drehzahlregelung des Prüfstandes eingestellt wird.

Bei realen Fahrzeugen liegt während der Übertragung einer Kraft zwischen den Antriebsrädern und einer Fahrbahn immer eine Differenz zwischen der zu der Fahrzeuggeschwindigkeit proportionalen Drehzahl und der tatsächlichen Drehzahl der Räder vor, die normiert als sogenannter Reifenschlupf bzw. Radschlupf bezeichnet wird. Der auftretende Radschlupf wird bei der in der EP 0 338 373 B1 vorgeschlagenen Simulation ersatzweise dadurch berücksichtigt, dass zu der sich aus der Fahrzeuglängsdynamik ergebenden Fahrzeuggeschwindigkeit bzw. zu der proportionalen Drehzahl ein vom gemessenen Ist-Drehmoment abhängiger prozentualer Schlupf addiert wird. Dieser prozentuale Schlupfwert wird anhand von Kennlinien, die einem gemessenen Ist-Drehmoment einen festen prozentualen Schlupf zuweisen, ermittelt, wobei diese Vorgehensweise für jedes Rad des Antriebsstranges getrennt durchgeführt wird.

Der sich daraus ergebende Drehzahl-Sollwert wird schließlich über die Drehzahlregelung des Prüfstandes eingestellt. Das dynamische Verhalten der Räder wird über die Dämpfungs- und Steifigkeitsparameter der Räder in den Regelparametern des Drehzahlreglers berücksichtigt.

Mit der vorbeschriebenen Vorgehensweise sind Betriebszustände mit quasi stationärem Reifenschlupf ausreichend genau simulierbar, Betriebszustandsverläufe, welche durch schnelle dynamische Änderungen und extreme Fahrsituationen, wie plötzlich durchdrehende Räder, gekennzeichnet sind, werden dadurch simuliert, dass das maximale Drehmoment der Belastungsmaschinen bzw. die Stellgröße des Drehzahlreglers auf das maximal übertragbare Moment bei gegebenen Rad- und Straßenparametern begrenzt wird. Die Drehzahlregelung ist während dieser Vorgehensweise nicht mehr aktiv bzw ohne Wirkung, weshalb während der Simulation eines Betriebszustandeseines Fahrzeugantriebsstranges mit durchdrehenden Rädern kein entsprechender Drehzahlsollwert berechnet wird, bzw. nicht mehr berechenbar ist, da dieser Abschnitt nicht als Funktion des Ist-Drehmomentes angebbar ist und daher im System auch nicht hinterlegt ist.

Nachteilig dabei ist jedoch, dass während der letztbeschriebenen Simulation von Betriebszuständen eines Fahrzeugantriebsstranges, wie mit durchdrehenden Rändern, auftretende Reibwertänderungen im Bereich zwischen den Rädern und einer Fahrbahn nicht mehr berücksichtigt werden können. Darüber hinaus ist von Nachteil, dass sich die Beschleunigung des Radabtriebes aus der Massenträgheit der elektrischen Maschine ergibt und daher andere Radträgheitsmomente beispielsweise während der Simulation von Betriebszuständen mit durchdrehenden Rädern am Prüfstand nicht abbildbar sind.

Da der betriebsmäßige Drehzahlregler während der Simulation von durchdrehenden Rädern abgeschaltet ist bzw. nicht im gewünschten Umfang betreibbar ist, besteht die Möglichkeit, dass sich während der Simulation am Prüfstand unzulässig hohe Drehzahhwerte im Bereich der Belastungsmaschinen einstellen. Um derartige Betriebszustände der elektrischen Maschine zu vermeiden, besteht beispielsweise die Möglichkeit, sogenannte Drehzahlfangregler vorzusehen, mittels welchen ebenfalls eine Begrenzung des Drehmomentes der Belastungsmaschine durchführbar ist, um die Drehzahlen der Belastungsmaschinen im zulässigen Bereich zu halten. Derartige Maßnahmen erfordern jedoch nachteilhafterweise zusätzlichen Steuer- und Regelungsaufwand.

Um diesen Nachteil zu umgehen, verfolgt die EP 1 037 030 B1 ein anderes System, nämlich das System der Drehmomentenregelung der Belastungsmaschine mit der Verrechnung der gemessenen Raddrehzahlen.

Dieses Verfahren zum Simulieren des Verhaltens eines Fahrzeuges auf einer Fahrbahn an einem Antriebsstrang-Prüfttand mit Hilfe von an den Wellen des Antriebsstranges des Fahrzeuges anbringbaren momentengeregelten, elektrischen Belastungsmaschinen und einem Rechner mit einem darin gespeicherten Fahrzeugmodell und einem die schlupfabhängige Reibung nachbildenden Reifenmodell ist in der EP 1 037 030 B1 offenbart. An wenigstens einer der Wellen wird die Raddrehzahl gemessen, aus der das Reifenmodell unter Heranziehung einer Fahrzeuggeschwindigkeit und einer Reifenaufstandskrafteine vom Reifen bei dieser Raddrehzahl auf die Fahrbahn übertragene Kraft und ein sich für diese Kraft ergebendes Soll-Drehmoment für die an dieser Welle angebrachte momentengeregelte Belastungsmaschine derart bestimmt, dass sich zwischen einem nominellen Drehzahlwert, der der dem Reifenmodell zugeführten Fahrzeuggeschwindigkeit entspricht, welche unter Rückführung der auf die Fahrbahn übertragenen Kraft im Fahrzeugmodell berechnet wird, und der gemessenen Raddrehzahl eine dem real auftretenden Schlupf entsprechende Differenz einregelt.

Der vorliegenden Erfindung liegt die Aufgabe zugrunde, ein Verfahren zum Betreiben eines Prüfstandes für Fahrzeugantriebsstränge zur Verfügung zu stellen, mittels welchem eine realitätsnahe Nachbildung des dynamischen Verhaltens eines Antriebsstranges eines Fahrzeuges bei unterschiedlichen Fahrbahnbelägen und Fahrbahnprofilen, insbesondere auch die Simulation von durchdrehenden Rädern, mit hoher Regelungsstabilität und geringem Steuer- und Regelaufwand durchführbar ist.

Erfindungsgemäß wird diese Aufgabe mit einem Verfahren mit den Merkmalen des Patentanspruches 1 gelöst.

Aufbauend auf der in der EP 0 338 373 B1 beschriebenen Drehzahlregelung, bei welcher das gemessene Wellendrehmoment dem Modell zugeführt wird, werden bei dem erfindungsgemäßen Verfahren zum Betreiben eines Prüfstandes für Fahrzeugantriebsstränge, während dem ein Betriebsverhalten von Rädern eines Fahrzeugantriebsstranges durch mit Wellen des jeweils wenigstens einen antreibbaren Fahrzeugabtriebes eines Fahrzeugantriebsstranges verbundenen elektrischen Maschinen dargestellt wird, die jeweils in Abhängigkeit eines für jede elektrische Maschine bestimmten betriebszustandsabhängigen Drehzahl-Sollwert, der jeweils über eine Drehzahkegelung eingestellt wird, betätigt werden, über ein das Betriebsverhalten der Räder abbildendes Reifenmodell ein Reibwertverlauf über dem Reifenschlupf und zusätzliche dynamische Änderungen des Betriebsverhaltens der Räder in Abhängigkeit von Betriebszustandsparametem der Reifen und Fahrbahn berücksichtigt, wobei zur Ermittlung der Reifenkräfte der berechnete Drehzahlsollwert dem Reifenmodell zugeführt wird.

Weiterhin besteht die Möglichkeit, dass während der Bestimmung der Sollwerte der Drehzahlen der elektrischen Maschinen eine Störgrößenaufschaltung und eine Soilwertvorsteuerung durchgeführt werden.

Mittels des erfindungsgemäßen Verfahrens ist das Verhalten von Fahrzeugantriebssträngen über deren gesamten Betriebsbereich, d. h. sowohl Betriebszustände mit quasistationärem Reifenschlupf und auch durch schnelle dynamische Änderungen und extreme Fahrsituationen gekennzeichnete Betriebszustandsverläufe, mittels einer Drehzahlregelung abbildbar, da die Drehzahlregelung durch die Störgrößenaufschaltung und auch die Sollwertvorsteuerung mit der dafür erforderlichen Dynamik durchführbar ist.

Somit besteht auf einfache Art und Weise im Vergleich zu der aus der EP 0 338 373 81 bekannten Lösung, bei der während Betriebszustandsvenäufen von Fahrzeugantriebssträngen mit durchdrehenden Rädern das Stellmoment der elektrischen Maschinen auf das maximal übeitragbare Drehmoment eines Rades bei gleichzeitig inaktiver Drehzahlregelung begrenzt wird und das reale Reifenverhalten nur näherungsweise nachbildbar ist, da eine Änderung bzw. eine weitere Abnahme des Reibwerts mit steigender Raddrehzahl bei durchdrehenden Rädern nicht berücksichtigbar ist, nunmehr auch bei durchdrehenden Rädern in Abhängigkeit des Reifenmodells ein Sollwert der Drehzahl der elektrischen Maschinen ermittelbar und über die Drehzahlregelung exakt einstellbar ist.

Der Sollwert der Drehzahl der elektrischen Maschine ist bereits während der Sollwertberechnung dahingehend begrenzbar, dass sich im Bereich der elektrischen Maschinen keine unzulässig hohen Drehzahlen während der Simukation einstellen. Damit besteht auf einfache Art und Weise die Möglichkeit, einen Prüfstand ohne zusätzliche Einrichtungen zur Drehzahlbegrenzung, wie Drehzahlfangregler oder dergleichen, kostengünstig und mit geringern Steuer- und Regelaufwand zu betreiben.

Im Vergleich zu der aus der EP 1 037 030 B1 bekannten Drehmomentenregelung sind mittels des erfindungsgemäßen Verfahrens Fehler in der internen Stromregelung bzw. der Drehmomentstellgenauigkeft der Frequenzumrichter oder der Stellglieder der elektrischen Maschinen über die Drehzahlregelung im stationären Betrieb ausgleichbar. Der Aufwand für das Motormodell und Kalibrierverfahren kann damit reduziert werden.

Darüber hinaus ist das tatsächliche Trägheitsmoment der Räder für Simulationen bzw, Untersuchungen, für die das exakte Nachbilden des Schwingungsverhaltens nicht entscheidend ist, im Gegensatz zu der aus der EP 1 037 030 B1 bekannten Vorgehensweise im Bereich der elektrischen Maschinen nicht exakt mechanisch aufzubauen.

Kleine Unterschiede zwischen den Trägheitsmomenten der zu simulierenden Räder und den Trägheitsmomenten der elektrischen Maschinen, mittels welchen das Betriebsverhalten der Räder darzustellen ist, sind während der Simulation nachbild- und berücksichtigbar, womit das Verhalten des Fahrzeugantriebsstranges im Wesentlichen unabhängig von der Massenträgheit des Prüfstandes bzw. des Prüfaufbaus ist.

Zusätzlich sind bei dem erfindungsgemäßen Verfahren die Drehzahl-Sollwerte der Räder bzw. der elektrischen Maschinen durch die Berechnung der Drehzahl-Sollwerte der elektrischen Maschinen über das Simulationssystem als Eingangsgrößen für das Reifenmodell verwendbar. Dies resultiert aus der Tatsache, berechneten betriebszustandsabhängige Drehzahl-Sollwerte stabiler als messtechnisch ermittelte Drehzahlgrößen sind, die mit Ungenauig~ keiten behaftet sein können, und somit im Vergleich zu aus dem Stand der Technik bekannten Verfahren mit der erfindungsgemäßen Vorgehensweise ein stabileres Prüfstandverhalten erreicht wird.

Des Weiteren sind die Räder eines Fahrzeugs immer vollständig in der Simulation integriert, womit bei Fahrzeugantriebssträngen mit nur einer antreibbaren Fahrzeugachse, wie Heck- oder Frontantrieben, bzw. bei einem Betrieb als Achsgetriebeprüfstand, die nicht aufgebauten Fahrzeugachsen hinsichtlich ihrer Drehzahl und des querdynamischen Verhaltens ohne Betrieb und reales Mitdrehen der zugehörigen Maschinen berücksichtigbar sind.

Das erfindungsgemäße Verfahren zum Betreiben eines Prüfstandes ist sowohl für Fahrzeugantriebsstränge geeignet, die mit einer, zwei oder auch mehreren antreibbaren Fahrzeugachsen, wie Allradfahrzeuge oder dergleichen, ausgeführt sind. D. h., dass das Betriebsverhalten von Antriebssträngen mit einer oder auch mehreren antreibbaren Fahrzeugachsen mittels des Verfahrens nach der Erfindung über einen breiten Betriebsbereich am Prüfstand darsteltbar ist.

Das erfindungsgemäße Verfahren bietet auf einfache und kostengünstige Art und Weise die Möglichkeit, das dynamische Verhalten eines Antriebsstranges eines Fahrzeuges auf unterschiedlichen Fahrbahnbelägen und bei Vorliegen verschiedenster Fahrbahnprofile realitätsnah nachzubilden und darüber hinaus während einer Simulation Faktoren, die Einfluss auf das Verhalten des Antriebsstranges haben, zu berücksichtigen, Durch die im Bereich des Reifenmodells durchführbare Nachbildung des Reifenschlupfes sind beispielsweise während einem Durchdrehen bzw. einem Blockieren von Rädern eines Fahrzeugantriebsstranges, beispielsweise während einem Überfahren von Eisplatten, auftretende Belastungen im Fahrzeugantriebsstrang realitätsnah nachbildbar.

Es besteht die Möglichkeit, beim erfindungsgemäßen Verfahren Ist-Drehmomente der Wellen der antreibbaren Fahrzeugachse messtechnisch zu ermitteln und zur Bestimmung der Sollwerte der Drehzahlen der elektrischen Maschine heranzuziehen.

Bei einer wiederum weiteren vorteilhaften Variante des Verfahrens nach der Erfindung werden bei der Störgrößenaufschaltung die messtechnisch ermittelten Ist-Drehmomente der Wellen der antreibbaren Fahrzeugachse zur Stellgröße eines Drehzahlreglers der Drehzahlregelung addiert, während bei der Sollwertvorsteuerung jeweils der Gradient der Sollwerte der Drehzahlen der elektrischen Maschinen mit den Trägheitsmomenten der elektrischen Maschinen multipliziert und zur Stellgröße des Drehzahlreglers addiert werden, um besonders während Betriebszustandsverläufen von Fahrzeugantriebssträngen bzw. Fahrzeugen, die durch eine hohe Dynamik gekennzeichnet sind, das reale Fahrzeugverhalten bzw. das Betriebsverhalten der Räder des Antriebsstranges möglichst exakt darstellen zu können.

Die Sollwerte der Drehzahlen der elektrischen Maschine werden bei einer Variante des erfindungsgemäßen Verfahrens durch Integration resultierender Drehmomentwerte eines jeden Rades bestimmt, wobei die resultierenden Drehmomentwerte für jedes der Räder der antreibbaren Fahrzeugachse aus einer Differenz aus dem messtechnisch ermittelten Ist-Drehmoment der damit korrespondierenden Welle und einem über das Reifenmodell ermittelten, über ein Rad übertragenen, berechneten Drehmomentwert bestimmt werden. Damit ist ein Fahrzeugverhalten am Prüfstand besonders realistisch nachbildbar.

Eine möglichst realitätsnahe Nachbildung eines Fahrzeugverhaltens wird mittels des Verfahrens nach der Erfindung, bei welchem in Abhängigkeit des Sollwertes der Drehzahl der elektrischen Maschine, welche zu der Soll-Drehzahl des durch die elektrische Maschine abzubildenden Rades äquivalent ist, erreicht.

Es besteht die Möglichkeit, in Abhängigkeit der aktuellen Werte der Radschlupfe jeweils die zwischen einem Rad der antreibbaren Fahrzeugachse und einer Fahrbahn übertragenen Längs- und/oder Querkräfte über das Reifenmodell zu bestimmen.

Das jeweils über ein Rad übertragene Drehmoment wird durch Multiplikation der Längs- und/oder Querkräfte mit einem dynamischen Radradius ermittelt, womit der berechnete Drehmomentwert eine große Übereinstimmung mit einem realen übertragbaren Drehmomentwert aufweist.

Bei der Ermittlung der resultierenden Drehmomentwerte besteht die Möglichkeit, jeweils ein simuliertes Bremsmoment zu berücksichtigen, welches beispielsweise durch Reibung erzeugt wird oder von einer Fahrzeugbremse, einer generatorisch betriebenen elektrischen Maschine oder dergleichen in den Fahrzeugantriebsstrang eingeleitet wird.

Eine in die integrative Bestimmung der resultierenden Raddrehzahl-Sollwerte einfließende Konstante wird bei einer weiteren vorteilhaften Variante des Verfahrens nach der Erfindung jeweils in Abhängigkeit von im Bereich der elektrischen Maschine abzubildenden Radträgheitsmomenten bestimmt, womit am Prüfstand ohne Umbau von mechanischen Massen beliebige Radgrößen simulierbar sind.

Um das Schwingungsverhalten eines Fahrzeugantriebsstranges optimal nachbilden zu können, entspricht das Trägheitsmoment der elektrischen Maschine wenigstens annähernd dem Trägheitsmoment des durch die elektrische Maschine abzubildenden Rades der antreibbaren Fahrzeugachse.

Bei einer weiteren vorteilhaften Variante des Verfahrens nach der Erfindung wird die Geschwindigkeit des Fahrzeuges in Abhängigkeit der über das Reifenmodell ermittelten Längskräfte der Räder der antreibbaren Fahrzeugachse und in Abhängigkeit von betriebszustandsabhängigen Fahrwiderständen durch Integration bestimmt.

Durch Nicken und Wanken des Fahrzeuges verursachte dynamische Änderungen der Radaufstandskräfte der Räder des Fahrzeugantriebsstranges werden in Abhängigkeit von vorgebbaren Längs- und Querbeschleunigungen des Fahrzeuges sowie der Geländebeschaffenheit bei der Abbildung des Betriebsverhaltens der Räder des Fahrzeugantriebsstranges bei einer weiteren vorteilhaften Variante des Verfahrens nach der Erfindung berücksichtigt.

Eine weitere Variante des Verfahrens berücksichtigt zur Simulation von Kurvenfahrten real an den Rädern des Fahrzeuges angreifende Kräfte, die mittels des Reifenmodells in Abhängigkeit gegebener Schräglaufwinkel der Räder ermittelt werden.

Während einer Kurvenfahrt jeweils an den Rädern eines Fahrzeuges angreifende Querkräfte werden bei einer weiteren Variante des Verfahrens einem ein Betriebsverhalten des Fahrzeuges abbindenden Fahrzeugmodell als Eingangsgrößen zugeführt, wobei mittels des Fahrzeugmodells ein Schwimmwinkel und eine Gierrate des Fahrzeuges in Abhängigkeit eines Lenkwinkels und verschiedener Fahrzeugparameter bestimmt werden. Damit ist ein reales Verhalten eines Fahrzeuges möglichst umfassend theoretisch abbildbar.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

### Es zeigt

- Fig. 1: eine stark schematisierte Darstellung eines Fahrzeugantriebsstranges und eines Prüfstandes für Fahrzeugantriebsstränge;
- Fig. 2: eine vereinfachte Funktionsdarstellung einer Simulationsstruktur des Prüfstandes gemäß Fig. 1; und
- Fig. 3: eine Funktionsdarstellung einer Drehzahlregelung des Prüfstandes gemäß Fig. 1.

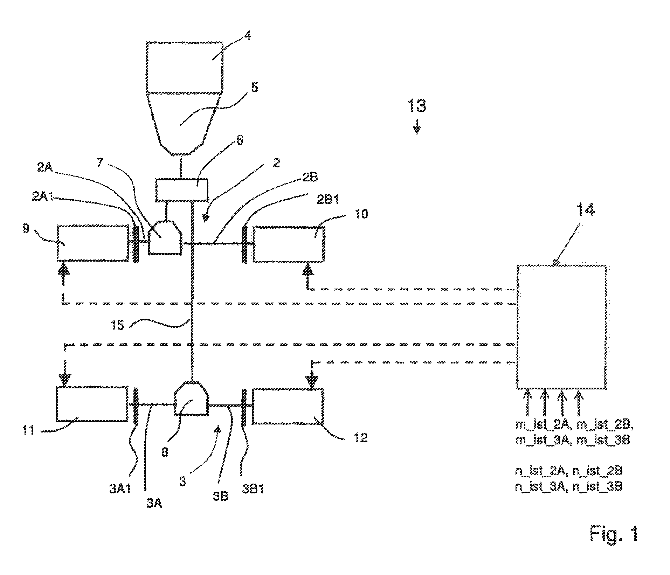

In Fig. 1 ist ein Fahrzeugantriebsstrang 1 eines Allradfahrzeuges dargestellt, der zwei antreibbare Fahrzeugachsen 2, 3 umfasst Dabei stellt die antreibbare Fahrzeugachse 2 vorliegend die Fahrzeugvorderachse und die antreibbare Fahrzeugachse 3 die Fahrzeughinterachse dar.

Ein von einer vorliegend als Verbrennungsmotor ausgebildeten Antriebmaschine 4 erzeugtes Drehmoment wird über eine vorliegend ein Hauptgetriebe des Fahrzeugantriebsstranges 1 darstellende Getriebeeinrichtung 5, die jede beliebige aus der Praxis bekannte Getriebebauform aufweisen kann, und einem zwischen der Getriebeeinrichtung 5 und den beiden Fahrzeugachsen 2 und 3 angeordneten Einrichtung zum Verteilen des Drehmomentes der Antriebsmaschine 4 zwischen den beiden Antriebsachsen 2 und 3 weitergeleitet. Dabei ist die Einrichtung 6 vorliegend als Längsdifferential ausgebildet und kann in Abhängigkeit des jeweils vorliegenden Anwendungsfalles auch eine andere geeignete Bauart zum Verteilen des Drehmoments der Antriebsmaschine 4 mit festem Verteilungsfaktor oder stufenlos variierbarem Verteilungsfaktor aufweisen,

Es besteht auch die Möglichkeit, statt dem Verbrennungsmotor einen Elektromotor oder eine Kombination aus Elektromotor und Verbrennungsmotor zu verwenden.

Das in Fahrzeuglängsrichtung zu den Fahrzeugachsen 2 und 3 geführte Drehmoment wird im Bereich eines Vorderachsdifferentials 7 und eines Hinterashsdifferentials 8 in Fahrzeugquerrichtung jeweils zu gleichen Teilen in Richtung einer rechten und in Richtung einer linken Fahrzeugseite auf Wellen 2A, 2B der Fahrzeugvorderachse 2 bzw. Wellen 3A, 3B der Fahrzeughinterachse 3 weitergeleitet.

Die Wellen 2A, 28 der Fahrzeugvorderachse 2 und die Wellen 3A, 3B der Fahrzeughinterachse 3 sind beim realen Fahrzeug mit Rädern des Fahrzeuges wirkverbunden, womit das von der Antriebsmaschine 4 zur Verfügung gestellte Drehmoment in Abhängigkeit der Übersetzungen der Getriebeeinrichtung 5, der Einrichtung 6, des Vorderachsdifferentials 7 und des Hinterachsdifferentials 8 in entsprechend gewandelter Höhe als Abtriebsmoment im Bereich der Wellen 2A bis 3B anliegt.

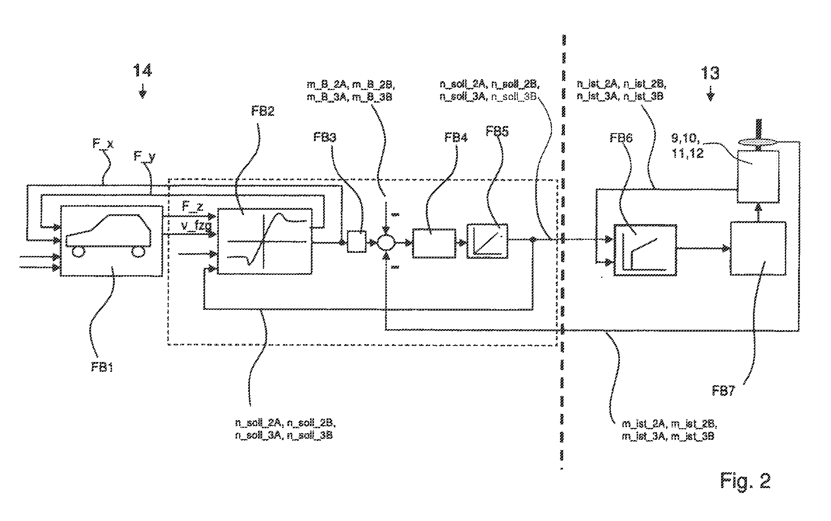

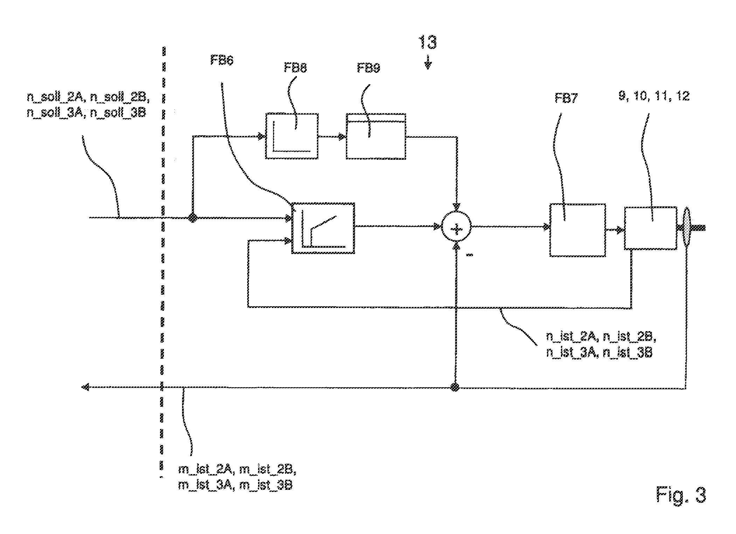

Der vorliegend ohne Räder ausgeführte Fahrzeugantriebsstrang 1 ist im Bereich der Wellen 2A bis 3B jeweils mit elektrischen Maschinen 9 bis 12 gekoppelt, deren Massenträgheitsmoment vorliegend im Wesentlichen dem Massenträgheitsmoment der über einen Prüfstand 13 zu simulierenden Räder des Fahrzeugantriebsstranges 1 entsprechen. Die elektrischen Maschinen 9 bis 12 sind sowohl motorisch als auch generatorisch in einem sogenannten Vier-Quadranten-Betrieb betreibbar, wobei die realitätsnahe Nachbildung des dynamischen Verhaltens des Fahrzeugantriebsstranges 1 bei unterschiedlichen Fahrbahnbelägen und Fahrbahnprofilen über ein in Fig. 2 und Fig. 3 näher dargestelltes Simulationssystem 14 des Prüfstandes 13 durchführbar ist.

Abweichend hiervon besteht jedoch auch die Möglichkeit, am Prüfstand 13 ein Betriebsverhalten eines gesamten Fahrzeugzeugaufbaus zu testen und zu simulieren, wobei dies mit Fahrzeugen mit und auch ohne Räder durchführbar ist. Für den Fall, dass ein Fahrzeug oder ein Fahrzeugantriebsstrang mit Rädern betrachtet wird, werden die elektrischen Maschinen 9 bis 12 durch die Räder hindurch in der erforderlichen Art und Weise mit den Wellen 2A bis 3B gekoppelt.

Neben einem Fahrzeug mit Verbrennungsmotor kann auch ein System mit einem Elektromotor als Antrieb oder ein System mit einem Hybridantrieb verwendet werden.

Es besteht auch die Möglichkeit, das Hinterachsdifferenzial 8 und die elektrischen Maschinen 11 und 12 durch eine einzige elektrische Maschine zu ersetzen, welche direkt mit der Kardanwelle 15 oder dem Getriebeabtrieb zusammenwirkt.

Über das Simulationssystem 14 sind grundsätzlich alle Faktoren, die Einfluss auf das Verhalten des Fahrzeugantriebsstranges 1 haben, betracht- und berücksichtigbar. Somit ist beispielsweise die Nachbildung des Reifenschlupfes der Räder des Fahrzeugantriebsstranges 1 und auch das Durchdrehen bzw. Blockieren der Räder insbesondere auf Eisplatten möglich, wobei dabei auftretende Belastungen im Bereich des Fahrzeugantriebsstranges 1 realitätsnah nachgebildet werden können.

Das Simulationssystem 14 des Prüfstandes 13 ist in Fig. 2 in Form eines vereinfachten Funktionsschaltbildes näher gezeigt. Dabei umfasst das Simulationssystem 14 ein sogenanntes Fahrzeugmodell, welches in Fig. 2 grafisch durch einen ersten Funktionsblock FB1 wiedergegeben ist.

Im Bereich des ersten Funktionsblockes FB1 wird das Fahrzeugmodell mit den aktuellen Betriebszustand eines Fahrzeuges charakterisierenden Betriebsparametern wie beispielsweise einem aktuell befahrenen Straßenprofil, wie einer Steigung oder einem Gefälle, einer durchfahrenen Fahrbahnkurve, einer Luftgeschwindigkeit und dergleichen, als Eingangsgrößen versorgt. Darüber hinaus werden dem Fahrzeugmodell auch Fahrzeugparameter, wie beispielsweise ein Fahrzeuggesamtgewicht, geometrische Abmessungen, Massenträgheiten und Fahrwerkparameter für eine Gesamtfahrzeugsimulation als Einganggrößen zugeführt.

Als Ausgangsgrößen liefert das Fahrzeugmodell eine Fahrzeuggeschwindigkeit v_fzg sowie Reifenaufstandskräfte F_z, weiche Eingangsgrößen eines Reifensmodells eines zweiten Funktionsblockes FB2 darstellen. Über das Reifenmodell wird ein Betriebsverhalten der Räder während der Simulation des Verhaltens des Fahrzeugantriebsstranges 1 abgebildet, wobei im Bereich des Reifenmodells ein Reibwertverlauf der Räder des Fahrzeugantriebsstranges 1 über dem Reifenschlupf und zusätzliche dynamische Änderungen des Betriebsverhaltens der Räder des Fahrzeugantriebsstranges 1 in Abhängigkeit von Reifenparametern, wie ein Durchmesser und Steifigkeiten und Elastizitäten der Reifen sowie temperaturabhängige Reifenparameter und dergleichen, berücksichtigt werden. der Reifen sowie temperaturabhängige Reifenparameter und dergleichen, berücksichtigt werden.

Über das Reifenmodell werden sowohl Längskräfte F_x und Querkräfte F_y im Bereich der Aufstandsfläche der Räder des Fahrzeugantriebsstranges 1 berechnet und dem Fahrzeugmodell des ersten Funktionsblockes FB1 als Eingangsgrößen zugeführt.

Es besteht auch die Möglichkeit, ein Rückstelldrehmoment über das Reifenmodell zu berechnen und für das Fahrzeugmodell zu verwenden. Zusätzlich kann über das Reifenmodell der Rollwiderstand bestimmt werden. Gleichzeitig werden die Längskräfte F_x der Räder in einem dritten Funktionsblock FB3 des Simulationssystems 14 mit dem dynamischen Radradius der Räder des Fahrzeugantriebsstranges 1 multipliziert und jeweils zu über Drehmomentmessflansche 2A1 und 2B1 bzw. 3A1 und 3B1 gemessenen Ist-Drehmomenten m_ist_2A, m_ist_2B, m_ist_3A und m_jst_3B der Wellen 2A bis 3B addiert, womit für jedes der Räder ein resultierender Drehmomentwert bestimmt wird,

In Abhängigkeit des jeweils zu betrachtenden Betriebszustandes des mit dem Fahrzeugantriebsstrang 1 ausgebildeten Fahrzeuges werden bei der Ermittlung der resultierenden Drehmomentwerte Bremsmomente m_B_2A bis m_B_3B des jeweiligen Rades durch Addition berücksichtigt. Anschließend werden die für jedes der Räder ermittelten resultierenden Drehmomentwerte einem vierten Funktionsblock FB4 als Eingangsgröße zugeführt und mit einer Konstanten, welche sich jeweils aus den zu simulierenden Radträgheitsmomenten der Räder ergibt, multipliziert und anschließend einem Integrierer eines fünften Funktionsblockes FB5 wiederum als Eingangsgröße zugeführt. Der fünfte Funktionsblock FB5 liefert für jede der elektrischen Maschinen 9 bis 12 als Ausgangswert einen Drehzahl-Sollwert n_soll_2A bis n_soll_3B, wobei die Drehzahl-Sollwerte n_soll_2A bis n_soll_3B sowohl für den zweiten Funktionsblock FB2 als auch für einen sechsten Funktionsblock FB6 Eingangswerte darstellen.

Neben den Sollwerten n_soll_2A bis n_soll_3B der Drehzahlen der elektrischen Maschinen 9 bis 12 stellen Ist-Werte n_ist_2A bis n_ist_3B der Drehzahlen der elektrischen Maschinen 9 bis 12 ebenfalls Eingangswerte des sechsten Funktionsblockes FB6 dar, der in Fig. 2 die Drehzahlregler der elektrischen Maschinen 9 bis 12 grapfisch wiedergibt. Der sechste Funktionsblock FB6 gibt in Abhängigkeit der Sollwerte n_soll_2A bis n_soll_38 der Drehzahlen der elektrischen Maschinen 9 bis 12 die Stellgrößen für Stromregler der elektrischen Maschinen 9 bis 12 aus, wobei die Stromregler in Fig. 2 durch einen siebten Funktionsblock FB7 grafisch wiedergegeben sind.

Über das Simulationssystem 14 des Prüfstandes 13 werden nur die nicht real vorhandenen Systeme des Fahrzeugantriebsstranges, wie die Räder, Bremsen, die Fahrzeugmassen, die Umgebungsbedingungen des Fahrzeuges, die Straßenbeschaffenheit und das Straßenprofil sowie ein Verhalten des Fahrers simuliert. Zur Simulation der Räder bzw. der Reifen sind aus der Praxis bekannte Reifenmodelle einsetzbar, mittels welchen ein exakter Reibwertverlauf über dem Reifenschlupf und zusätzlich die dynamischen Änderungen anhand von Reifensteifigkeiten und -dämpfungen in Längs-, Quer- und Vertikalrichtung berücksichtigbar sind.

Bei durchdrehenden Rädern wird die Bestimmung der Sollwerte der Drehzahlen der elektrischen Maschinen 9 bis 12 beibehalten und die Drehzahlregelung nicht verlassen, womit eine zusätzliche Begrenzung des Drehzahlreglers im Bereich des sechsten Funktionsblockes FB6 auf ein im Bereich der Räder jeweils maximal übertragbares Drehmoment nicht erforderlich ist. Somit werden für alle Fahrsituationen Sollwerte n_soll_2A bis n_soll_3B der Drehzahlen der elektrischen Maschinen 9 bis 12 berechnet, die über die Drehzahlregelung im Bereich des sechsten Funktionsblockes FB6 eingestellt werden.

Grundsätzlich sind die Ist-Drehmomente m_ist_2A bis m_ist_3B der Wellen 2A bis 3B der Fahrzeugvorderachse 2 und der Fahrzeughinterachse 3 messtechnisch über eine dynamische Messung dieser Drehmomente zu ermitteln, wobei zur Drehmomentmessung der Einsatz von aktuellen Entwicklungen von Drehmomentmessflanschen mit hoher Grenzfrequenz vorteilhaft ist.

Während der Bestimmung der Sollwerte n_soll_2A bis n_soll_3B der Drehzahlen der elektrischen Maschinen 9 bis 12 wird für jedes zu betrachtende Rad des Fahrzeugantriebsstranges 1 ein aus dem gemessenen Wellenmoment m_ist_2A bis m_ist_38 abzüglich der jeweils über die Räder übertragenen Drehmomente, die im Reifenmodell des zweiten Funktionsblockes FB2 durch Multiplikation der Längskräfte F_x mit dem dynamischen Radradius der Räder berechnet wird, die Drehmomentbilanz erstellt, Durch Integration der resultierenden Drehmomente im Funktionsblock FB5 werden die entsprechenden Sollwerte n_soll_2A bis n_soll_3B der Drehzahlen der Räder berechnet, die dem Reifenmodell wieder als Eingangswerte zugeführt werden.

Über das Reifenmodell werden aus den Sollwerten der Drehzahlen der elektrischen Maschinen 9 bis 12, die zu den Sollwerten der Drehzahlen der Räder äquivalent sind, und der entsprechenden Fahrzeuggeschwindigkeit v_fzg für jedes Rad ein aktueller Reifenschlupf und damit die aktuell zwischen der Fahrbahn und den Rädern jeweils übertragenen Kräfte in Längs- und in Querrichtung berechnet, wobei sowohl die Längskräfte F_x und die Querkräfte F_y Funtkionen der Reifen und Fahrbahnparameter, der Reifenaufstandskräfte F_z und des Reifenschlupfes sind. Das mit den Längskräften F_x korrespondierende und über die Räder übertragene Drehmoment ergibt sich jeweils durch Multiplikation der Längskräfte F_x mit den dynamischen Radradien,

Bei der Erstellung der Drehmomentbilanzen im Bereich der Räder werden auch Bremsmomente m_B_2A bis m_B_3B berücksichtigt, die beispielsweise durch Reibungskräfte erzeugt werden und dissipative also nicht konservative Kräfte sind, die die Energien der Räder nicht erhöhen können. Aus diesem Grund darf die Berücksichtigung der Bremsmomente nicht zu einer Erhöhung des Betrages der Drehzahl eines Rades führen. Die resultiert wiederum aus der Tatsache, dass das oder die Räder bei Vorliegen eines Bremsmomentes bzw. einer Bremskraft maximal blockieren können und dann eine Raddrehzahl gleich null aufweist. Aus diesem Grund ist die zu berücksichtigende Bremskraft gegebenenfalls in Abhängigkeit weiterer Randbedingungen dahingehend zu modifizieren, dass ein Anstieg des Betrages der Raddrehzahlen bei einer Berücksichtigung eines Bremsmomentes vermieden wird.

Die vorliegend zur Integration der Drehmomentbilanzen jeweils verwendete Konstante, welche dem reziproken Wert des Produktes aus dem Wert 2, der Kreiszahl Π und dem Radträgheitsmoment entspricht, bestimmt sich somit aus dem zu simulierenden Radträgheitsmoment. In Abhängigkeit des jeweils vorliegenden Anwendungsfalles können hierfür auch andere Trägheitsmomente als das der aufgebauten elektrischen Maschinen 9 bis 12 eingesetzt werden, womit am Prüfstand ohne Umbau von mechanischen Massen auch andere Radgrößen simulierbar sind, Um das Schwingungsverhalten des Systems optimal nachbilden zu können, wird angestrebt, dass die Trägheitsmomente der angeflanschten elektrischen Maschinen 9 bis 12 jeweils den Trägheitsmomenten der zu simulierenden Räder weitestgehend entsprechen.

Zusätzlich sind sowohl über das Fahrzeugmodell des ersten Funktionsblockes FB1 als auch über die Reifenmodelle des Funktionablockes FB2 das Nicken und Wanken des Fahrzeuges und damit die dynamischen Änderungen der Reifenaufstandskräfte F_z in Abhängigkeit von den simulierten Längs- und Querbeschleunigungen des Fahrzeugs sowie der Geländebeschaffenheit, die beispielsweise durch eine Steigung oder eine Schrägfahrt charakterisiert ist, berücksichtigbar.

Zur Simulation von Kurvenfahrten des Fahrzeuges werden die real im Bereich der Räder auftretenden Kräfte, speziell die für die Spurhaltung verantwortlichen Quer- oder Seitenkräfte F_y, berücksichtigt, die mit dem gegebenen Schräglaufwinkel ebenfalls über das Reifenmodell des zweiten Funktionsblockes FB2 ermittelbar sind. Die Querkräfte F_yjedes einzelnen Rades werden dem Fahrzeugmodell zur Darstellung einer Querdynamik zugeführt. Über das Fahrzeugmodell wird anhand des vorgegebenen Lenkwinkels und der Fahrzeugparameter, wie Massenträgheiten und Fahrzeuggeometrien, der Schwimmwinkel und die Gierrate des Fahrzeuges und damit die zurückgelegte Kurve berechnet.

Über das Simulationssystem 14 des Prüfstandes 13 wird für jedes der Räder des Fahrzeugantriebsstranges 1 ein separater Sollwert n_soll_2A bis n_soll_3B der Drehzahlen der elektrischen Maschinen 9 bis 12 ermittelt, wobei für jedes Rad ein separater Drehzahlregler im sechsten Funktionsblock FB6 vorgesehen ist Zur Verbesserung des dynamischen Verhaltens des Simulationssystems 14 wird eine in Fig. 3 näher dargestellte Reglerstruktur mit einer Störgrößenaufschaltung und einer Sollwert-Vorsteuerung verwendet. Hierfür werden die gemessenen Wellendrehmomente m_ist_2A bis m_ist_3B jeweils als Störgröße zur Stellgröße des Drehzahlregler des sechsten Funktionsblockes FB6 addiert

Bei der Sollwert-Vorsteuerung wird im Funktionsblock FB8 der Gradient der Drehzahl-Sollwerte der elektrischen Maschinen gebildet und im Funktionsblock FB9 mit einer dem Trägheitsmoment der elektrischen Maschine proportionalen Konstante multipliziert und zur Stellgröße des Dehzahlreglers des sechsen Funktionsblockes FB6 addiert.

Zusätzlich werden über die Sollwert-Vorsteuerung schnelle Änderungen der Führungsgröße ermöglicht, wobei jeweils der Gradient der Sollwerte n_soll_2A bis n_soll_3B der Drehzahlen der elektrischen Maschinen 9 bis 12 mit dem eigenen Massenträgheitsmoment der aufgebauten elektrischen Maschinen 9 bis 12 multipliziert wird. Sowohl über die Störgrößenaufschaltung als auch über die Sollwert-Vorsteuerung ist die Drehzahlregelung der elektrischen Maschinen 9 bis 12 bei dynamischen Betriebszustandsverläufen des Fahrzeugantriebsstranges 1 mit hoher Dynamik der elektrischen Maschinen 9 bis 12 durchführbar.

### Bezugszeichen

- 1: Fahrzeugantriebsstrang
- 2: Fahrzeugachse
- 2A, 2B: Welle
- 2A1, 2B1: Drehmomentmessflansch
- 3: Fahrzeugachse
- 3A, 38: Welle
- 3A1, 3B1: Drehmomentmessflansch
- 4: Antriebsmaschine
- 5: Getriebeeinrichtung
- 6: Einrichtung zum Verteilen von Drehmomenten
- 7: Vorderachsdifferential
- 8: Hinterachsdifferential
- 9 bis 12: elektrische Maschinen
- 13: Prüfstand
- 14: Simulationssystem
- 15: Kardanwelle

- FB1 bis FB7: Funktionsblock
- F_x: Längskraft
- F_y: Querkraft
- F_z: Reifenaufstandskraft
- m_ist_2A bis m_is_3B: Wellendrehmoment
- m_B_2A bis m_B_3B: Bremsmomente
- n_soll_2A bis n_soll_3B: Sollwerte der Drehzahl der elektrischen Maschinen
- n_ist_2A bis n_ist_3B: Ist-Drehzahlen der elektrischen Maschinen
- V_fzg: Fahrzeuggeschwindigkeit

## Patentansprüche

1. Verfahren zum Betreiben eines Prüfstandes (13) für Fahrzeugantriebsstränge (1), bei welchem ein Betriebsverhalten von Rädern eines Fahrzeugantriebsstranges (1) durch mit Wellen (2A, 2B, 3A, 3B) der jeweils wenigstens einen antreibbaren Fahrzeugabtriebes bzw, -achse (2, 3) eines Fahrzeugantriebsstranges (1) verbundenen elektrischen Maschinen (9 bis 12) dargestellt wird, die jeweils in Abhängigkeit eines für jede elektrische Mascnine(9 bis 12) bestimmten betriebszustandsabhängigen Drehzahl-Sollwert (n_soll_2A), der jeweils über eine Drehzahlregelung eingestellt wird, betätigt werden, **dadurch gekennzeichnet, dass** über ein das Betriebsverhalten der Räder abbildende Reifenmodell ein Reibwertvedauf über dem Reifenschlupf und zusätzlich dynamische Änderungen des Betriebsverhaltens der Räder in Abhängigkeit von Betriebszustandsparametern der Reifen und Fahrbahn berücksichtigt werden, wobei zur Ermittlung der Reifenkräfte der berechnete Drehzahl-Sollwert dem Reifenmodell zugeführt wird,

2. Verfahren nach Anspruch 1, **dadurch gekennzeichnet, dass** Ist-Drehmomente (m_ist_2A, m_ist_2B, m_ist_3A, m_ist_3B) der Wellen (2A, 2B, 3A, 3B) der antreibbaren Fahrzeugachse (2, 3) messtechnisch ermittelt und zur Bestimmung der Sollwerte (n_soll_{_}2A bis n_soll_3B) der Drehzahlen der elektrischen Maschinen (9 bis 12) herangezogen werden.

3. Verfahren nach Anspruch 15, **dadurch gekennzeichnet,** bei der Störgrößenaufschaltung die messtechnisch ermittelten Drehmomente (m_ist_2A, m_ist_2B, m_ist_3A, m_ist_3B) der Wellen (2A bis 3B) der antreibbaren Fahrzeugachse (2, 3) zur Stellgröße eines Drehzahlreglers der Drehzahlregelung addiert werden, während bei der Sollwertvorsteuerung jeweils der Gradient der Sollwerte (n_soll_2A bis n_soll_3B) der Drehzahlen der elektrischen Maschinen (9 bis 12) mit den Trägheitsmomenten der elektrischen Maschinen (9 bis 12) multipliziert und zur Stellgröße des Drehzahlreglers addiert werden.

4. Verfahren nach Anspruch 2 oder 3, **dadurch gekennzeichnet, dass** für jedes der Räder der antreibbaren Fahrzeugachse (2, 3) jeweils ein resultierender Drehmomentwert aus einer Differenz aus dem messtechnisch ermittelten Ist-Drehmoment (m_ist_2A, m_ist_2B, m_ist_3A, m_ist_3B) der damit korrespondierenden Welle (2A bis 3B) und einem über das Reifenmodell ermittelten, über ein Rad übertragenen, berechneten Drehmomentwert bestimmt wird, wobei die Sollwerte (n_soll_2A bis n_so_3B)) der Drehzahlen der elektrischen Maschinen (9 bis 12) jeweils durch Integration der resultierenden Drehmomentwerte eines jeden Rades bestimmt werden.

5. Verfahren nach einem der Ansprüche 1 bis 4, **dadurch gekennzeichnet, dass** in Abhängigkeit der Sollwerte (n_soll_2A) der Drehzahlen der elektrischen Maschinen (9 bis 12), welche zu den Soll-Drehzahlen der durch die elektrische Maschinen (9 bis 12) abzubildenden Räder äquivalent sind, und in Abhängigkeit einer zu einem vorgebbaren Betriebspunkt äquivalenten Geschwindigkeit (v_fzg) des mit dem betrachteten Fahrzeugantriebsstranges ausgeführten Fahrzeuges über das Reifenmodell für jedes Rad der antreibbaren Fahrzeugachse (2, 3) ein aktueller Wert des Radschlupfes ermittell wird

6. Verfahren nach Anspruch 5, **dadurch gekennzeichnet, dass** in Abhängigkeit der aktuellen Werte der Radschlupfe jeweils die zwischen einem Rad der antreibbaren Fahrzeugachse (2, 3) und einer Fahrbahn übertragenen Längskräfte (F_x) über das Reifenmodell bestimmt werden.

7. Verfahren nach Anspruch 6, **dadurch gekennzeichnet, dass** jeweils über ein Rad übertragenes Drehmoment durch Multiplikation der Längskräfte(F__x) mit einem dynamischen Redradius ermittelt wird.

8. Verfahren nach einem der Ansprüche 4 bis 7, **dadurch gekennzeichnet, dass** bei der Ermittlung der resultierenden Drehmomentwerte jeweils ein Bremsmoment (m_B_2A bis m_B_3B) berücksichtigt wird.

9. Verfahren nach einem der Ansprüche 4 bis 8, **dadurch gekennzeichnet, dass** eine in die integrative Bestimmung der resultierenden Raddrehzahl-Sollwerte einfließende Konstante jeweils in Abhängigkeit der abzubildenden Radträgheftsmomenten bestimmt wird.

10. Verfahren nach einem der Ansprüche 1 bis 9, **dadurch gekennzeichnet, dass** Trägheitsmomente der elektrischen Maschinerr(9 bis 12) wenigstens annähernd Trägheitsmomenten der durch die elektrischen Maschinen (9 bis 12) abzubildenden Räder der antreibbaren Fahrzeugachse (2, 3) entsprechen.

11. Verfahren nach einem der Ansprüche 5 bis 10, **dadurch gekennzeichnet, dass** die Geschwindigkeit (v_fzg) des Fahrzeuges in Abhängigkeit der Ober das Reifenmodell ermittelten Kräfte der Räder der antreibbaren Fahrzeugachse (2, 3) und in Abhängigkeit von betriebszustandsabhängigen Fahrwiderständen durch Integration bestimmt wird.

12. Verfahren nach einem der Ansprüche 1 bis 11, **dadurch gekennzeichnet, dass** durch Nicken und Wanken des Fahrzeuges verursachte dynamische Änderungen von Radaufstandskräften der Räder des Fahrzeugantriebsstranges (1) in Abhängigkeit von vorgebbaren Längs- und Querbeschleunigungen des Fahrzeuges sowie der Geländebeschaffenheit bei der Abbildung des Betriebsverhaltens der Räder des Fahrzeugantriebsstranges (1) berücksichtigt wird.

13. Verfahren nach einem der Ansprüche 1 bis 12, **dadurch gekennzeichnet, dass** zur Simulation von Kurvenfahrten real an den Rädern des Fahrzeugantriebsstranges (1) angreifende Querkräfte (F_y) berücksichtigt werden, die mittels des Reifenmodells in Abhängigkeit vorgegebener Schräglaufwinkel der Räder ermittelt werden.

14. Verfahren nach Anspruch 13, **dadurch gekennzeichnet, dass** während einer Kurvenfahrt jeweils an den Rädern eines Fahrzeugantriebsstranges angreifende Querkräfte (F_y) einem ein Betriebsverhalten des Fahrzeuges abbindenden Fahrzeugmodell als Eingangsgrößen zugeführt werden, wobei mittels des Fahrzeugmodells zumindest ein Schwimmwinkel und eine Gierrate des Fahrzeuges in Abhängigkeit eines Lenkwinkels und verschiedener Fahrzeugparameter bestimmt werden.

15. Verfahren nach Anspruch 1, **dadurch gekennzeichnet, dass** ergänzend zur Bestimmung der Sollwerte der Drehzahlen der elektrischen Maschinen (9 bis 12) eine Störgrößenaufschaltung und eine Sollwert-Vorsteuerung durchgeführt werden.
